Europäisches Patentamt

(19) European Patent Office

Office européen des brevets

(11) EP 0 771 820 A1

## (12) EUROPEAN PATENT APPLICATION

(43) Date of publication:
07.05.1997 Bulletin 1997/19

(51) Int. Cl.⁶: $C08F\ 10/00$, $C08F\ 4/654$

(21) Application number: 95117325.1

(22) Date of filing: 03.11.1995

(84) Designated Contracting States:
AT BE DE ES FR GB GR IT NL PT SE

(71) Applicant: **UNION CARBIDE CHEMICALS & PLASTICS TECHNOLOGY CORPORATION**
Danbury, Connecticut 06817-0001 (US)

(72) Inventors:
• **Fowler, Elton Doyle**
Victoria, Texas 77904 (US)

• **Awe, Michael David**
Langhorne, Pennsylvania 19047 (US)
• **Jorgensen, Robert James**
Belle Mead, New Jersey 08502 (US)

(74) Representative: **Barz, Peter, Dr.**
Patentanwalt
Kaiserplatz 2
80803 München (DE)

### (54) Supported ziegler-natta catalysts for polyolefin production

(57) Ziegler Natta catalysts for production of polyolefins, particularly polyethylene and copolymers thereof. Catalysts having improved activities are produced in a multi-stage procedure in which a porous supporting material is impregnated with a precursor composition, and then this is further treated one or more times with subpore volumes of secondary solutions of precursor components. Claims to the process for producing the catalysts, and to a process for making polyolefins using the catalysts are also presented.

## Description

This invention relates to Ziegler Natta catalysts for polymerization of olefins, and more particularly, to a process for the preparation of improved catalysts for production of polyethylene.

Production of ethylene homopolymers and copolymers using Mg/Ti Ziegler Natta catalysts is discussed in numerous patent and scientific references. Catalyst precursors of composition $MgCl_2/MCl_x/ED$ wherein x is 3 or 4 and ED represents oxygen-containing electron donors such as esters, ethers, and ketones, and M is a transition metal such as vanadium, titanium, zirconium and hafnium have found wide use in industry, particularly in gas-phase polymerizations. These catalyst precursors can exist in the form of particulate materials mixed with inert diluents (Wagner et al., U.S. Patent 4,684,703), or impregnated in an inert support (Goeke et al., U.S. Patent 4,302,565), or as spray-dried compositions (Hamer et al., U.S. Patent 4,293,673).

In these catalyst precursors, it is generally desirable to have a high ratio of Mg to Transition Metal as well as a high level of Transition Metal, for high catalytic activity and high productivity in the manufacture of polyolefins. However, particularly in supported catalysts, this has been difficult to achieve in practice, due to the rather limited solubility of the magnesium salt in the solution of reagents from which the catalyst is made.

In the case of supported catalysts, the catalyst is typically made in an impregnation process by dissolving desired amounts of the magnesium and transition metal salts in a suitable solvent, slurrying this with the support material, then removing the solvent. If the level of the magnesium salt in the solution is too high, during the solvent removal step it tends to precipitate preferentially on the surface of the supporting material, causing catalyst particles to clump together and to have nonhomogeneous catalytic properties. Such materials are difficult to handle and feed into the reactor, and produce poor quality polymer if used in polymerizations.

A related process is the technique termed dry impregnation or impregnation to incipient dryness. In this process, which is usually used with aqueous solutions, a batch of the supporting material is tumbled and sprayed with a solution of an appropriate concentration, corresponding in quantity to the total known pore volume of the support, or slightly less. Although in principle this allows accurate control of the amount of the active ingredient that will be incorporated into the catalyst, the maximum loading obtainable in a single impregnation is limited by the solubility of the reagent, and in practice it can be difficult to achieve particular desired compositions when multiple impregnations are used. For a further discussion of these catalyst preparation methods, see "Heterogeneous Catalysis in Industrial Practice", C. N. Satterfield, McGraw Hill Publishers, 1991.

It would be desirable to have a process for preparing supported uniformly loaded catalysts which have both high levels of transition metal and high ratios of magnesium to transition metal. Such a process is the subject of the present application.

The present invention provides an improved catalyst for polyolefin production, a process for preparing the catalyst composition, and a process for producing polyethylene using the improved catalyst.

The improved catalyst composition of the invention comprises a supported precursor composition having the formula

$$Mg_mM(OR)_nX_p\{ED\}_q$$

wherein:

M is a transition metal selected from the group consisting of vanadium, titanium, zirconium and hafnium;
R is R' or COR' wherein R' is a $C_1$ to $C_{14}$ aliphatic hydrocarbon radical or a $C_6$ to $C_{14}$ aromatic hydrocarbon radical;
X is Cl, Br, I, or a mixture thereof;
ED is an electron donor compound which is a liquid organic compound in which said precursor composition is soluble and which is selected from the group consisting of alkyl esters of aliphatic and aromatic carboxylic acids, aliphatic ethers, cyclic ethers, and aliphatic ketones;
m is 0.5 to 56;
n is 0, 1 or 2;
p is 4 to 116; and
q is 2 to 85;

said precursor composition having been formed by means of the following steps i) through v):

(i) forming a slurry of a porous supporting material, and a solution of at least one magnesium compound and at least one transition metal compound in an electron donor compound;
    said magnesium compound having the formula $MgX_2$ wherein X is as defined above;
    said transition metal compound having the formula $M(OR)_aX_b$ wherein M, R, and X are as defined above; a is 0, 1 or 2; b is 1 to 4 inclusive; and $a + b = 3$ or 4 ; and

the total weight of the solutes in the solution which forms the slurry of step (i) being such that said weight of solutes dissolves in a volume of the electron donor material equal to the pore volume of the supporting material employed in said slurry;

(ii) removing solvent electron donor compound from the slurry of step (i) to recover said magnesium and transition metal compounds and associated electron donor compound in conjunction with said supporting material;

(iii) adding to the product of step (ii) a solution of electron donor compound containing at least one material selected from the group consisting of magnesium compounds and transition metal compounds as defined in step (i), the volume of this added solution being less than the pore volume of the material being treated;

(iv) removing solvent electron donor compound from the product of step (iii) to recover said magnesium and transition metal compounds and associated electron donor compound in conjunction with supporting material; and

(v) repeating steps (iii) and (iv) if necessary until catalyst precursor of the desired composition is obtained, whereby the formed precursor composition is substantially contained within the pores of said supporting material and insufficient precursor composition remains on the surface to allow agglomerates formation;

the total amounts of said magnesium and transition metal compounds employed being such that the values of m, n, p and q are satisfied in the final catalyst precursor; and

said precursor having been partially activated by treating it in a hydrocarbon slurry with >0 to 10 mols of activator compound per mol of transition metal in said precursor composition;

said activator compound having the formula

$$Al(R'')_c X'_d H_e$$

wherein

X' is Cl or OR''';
R'' and R''' are the same or different; and are $C_1$ to $C_{14}$ hydrocarbon radicals;
d is 0 to 1.5;
e is 1 or 0; and
c + d + e = 3 .

The process for making the improved catalyst composition comprises the following steps:

(A) forming on a supporting material a catalyst precursor composition having the formula

$$Mg_m M(OR)_n X_p \{ED\}_q$$

wherein:

M is a transition metal selected from the group consisting of vanadium, titanium, zirconium and hafnium;
R is R' or COR' wherein R' is a $C_1$ to $C_{14}$ aliphatic hydrocarbon radical or a $C_6$ to $C_{14}$ aromatic hydrocarbon radical;
X is Cl, Br, I, or a mixture thereof;
ED is an electron donor compound which is a liquid organic compound in which said precursor composition is soluble and which is selected from the group consisting of alkyl esters of aliphatic and aromatic carboxylic acids, aliphatic ethers, cyclic ethers, and aliphatic ketones;
m is 0.5 to 56;
n is 0, 1 or 2;
p is 4 to 116; and
q is 2 to 85;

by means of the following steps i) through v):

(i) forming a slurry of a porous supporting material, and a solution of at least one magnesium compound and at least one transition metal compound in an electron donor compound;

said magnesium compound having the formula $MgX_2$ wherein X is as defined above;

said transition metal compound having the formula $M(OR)_a X_b$ wherein M, R, and X are as defined above; a is 0, 1 or 2; b is 1 to 4 inclusive; and a + b = 3 or 4 ; and

the total weight of the solutes in the solution which forms the slurry of step (i) being such that said weight of solutes dissolves in a volume of the electron donor material equal to the pore volume of the supporting material employed in said slurry;

(ii) removing solvent electron donor compound from the slurry of step (i) to recover said magnesium and transition metal compounds and associated electron donor compound in conjunction with said supporting material;

(iii) adding to the product of step (ii) a solution of electron donor compound containing at least one material selected from the group consisting of magnesium compounds and transition metal compounds as defined in step (i), the volume of this added solution being less than the pore volume of the material being treated;

(iv) removing solvent electron donor compound from the product of step (iii) to recover said magnesium and transition metal compounds and associated electron donor compound in conjunction with supporting material; and

(v) repeating steps (iii) and (iv) if necessary until catalyst precursor of the desired composition is obtained, whereby the formed precursor composition is substantially contained within the pores of said supporting material and insufficient precursor composition remains on the surface to allow agglomerates formation;

the total amounts of said magnesium and transition metal compounds employed being such that the values of m, n, p and q are satisfied in the final catalyst precursor; and

(B) partially activating the catalyst precursor composition by treating it in a hydrocarbon slurry with >0 to 10 mols of activator compound per mol of transition metal in said precursor composition;

said activator compound having the formula

$$Al(R'')_c X'_d H_e$$

wherein

X' is Cl or OR''';
R'' and R''' are the same or different; and are $C_1$ to $C_{14}$ hydrocarbon radicals;
d is 0 to 1.5;
e is 1 or 0; and
$c + d + e = 3$.

The invention also relates to a process for producing ethylene homopolymers and copolymers, comprising the following steps:

(A) forming a reaction mixture comprising:

i) ethylene, or a mixture of ethylene and at least one comonomer which is an alpha olefin having 3-8 carbon atoms;
ii) optionally, a molecular weight control agent;
iii) an activator compound; and
iv) a catalyst composition of the present invention; and

(B) effecting polymerization of said ethylene or said mixture of ethylene and comonomer in the presence of said catalyst composition.

The invention will be better understood from a consideration of the following detailed description, taken in conjunction with the drawing, in which:

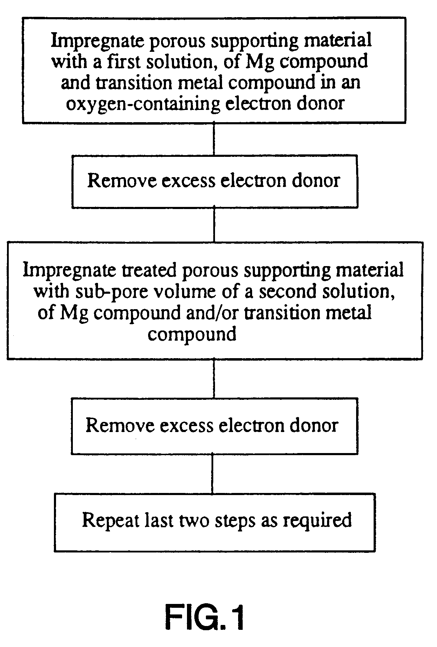

Fig. 1 is a flow chart of the preparative process of the invention.

Components of Catalyst Precursor

The compounds used to form the catalyst composition comprise at least one magnesium compound, at least one transition metal compound, at least one electron donor compound, at least one activator compound, which will be discussed in the section below relating to activation of the precursor composition, and at least one porous inert supporting material, as defined below.

The transition metal compound has the structure $M(OR)_a X_b$ wherein M is vanadium, titanium, zirconium, or hafnium; R is R' or COR' where R' is a $C_1$ to $C_{14}$ aliphatic hydrocarbon radical or a $C_6$ to $C_{14}$ aromatic hydrocarbon radical; X is selected from the group consisting of Cl, Br, I, and mixtures thereof; a is 0, 1 or 2; b is 1 to 4 inclusive; and $a + b = 3$ or 4. Preferably, M is Ti or V, X is Cl, a is 0, and b is 3 or 4.

The transition metal compounds can be used individually or in combinations thereof. Examples of suitable titanium-containing materials are $TiCl_3$, $TiCl_4$, $Ti(OCH_3)Cl_3$, $Ti(OC_6H_5)Cl_3$, $Ti(OCOCH_3)Cl_3$ and $Ti(OCOC_6H_5)Cl_3$ may be used.

$TiCl_3$ is preferred. Vanadium compounds such as $VCl_3$ and $VCl_4$ and chloroalkoxides may also be used. $VCl_3$ is preferred. Similarly, zirconium compounds such as $Zr(OEt)_2Cl_2$, $ZrCl_2(OiPr)_2$ and $Zr(Acetylacetonate)_2Cl_2$ may be used. $ZrCl_4$ and $ZrCl_2(OEt)_2$ and $Zr(Acetylacetonate)_2Cl_2$ are preferred. Among the suitable hafnium compounds are materials such as $HfCl_4$, $HfCl_2(OEt)_2$, $HfCl_2(OiPr)_2$ and $Hf(Acetylacetonate)_2Cl_2$. Preferred hafnium compounds are $HfCl_4$, $HfCl_2(OEt)_2$ and $Hf(Acetylacetonate)_2Cl_2$.

The magnesium compounds have the structure $MgX_2$ wherein X is Cl, Br, I, or a mixture thereof. Preferably, X is Cl. Such magnesium compounds can be used individually or in combinations thereof, and may be such materials as $MgCl_2$, $MgBr_2$, and $MgI_2$. Anhydrous $MgCl_2$ is most preferred.

The transition metal and magnesium compounds should be used in forms which will facilitate their dissolution in the electron donor compound, as described below.

The electron donor compound used in the catalyst precursor is an organic compound which is liquid at 25 °C and in which the transition metal and magnesium compounds are soluble. The electron donor compounds are known, as such, or as Lewis bases.

The electron donor compounds are such compounds as alkyl esters of aliphatic and aromatic carboxylic acids, aliphatic ethers, cyclic ethers, and aliphatic ketones. Among these electron donor compounds the preferable ones are alkyl esters of $C_1$ to $C_4$ saturated aliphatic carboxylic acids; alkyl esters of $C_7$ to $C_8$ aromatic carboxylic acids; $C_2$ to $C_8$, and preferably $C_3$ to $C_5$, aliphatic ethers; $C_3$ to $C_4$ cyclic ethers, and preferably $C_4$ cyclic mono- or di-ethers; $C_3$ to $C_6$, and preferably $C_3$ to $C_4$, aliphatic ketones. The preferred electron donor compounds include methyl formate, ethyl acetate, butyl acetate, ethyl ether, hexyl ether, tetrahydrofuran, dioxane, acetone and methyl isobutyl ketone. The electron donor compounds can be used individually or in combinations thereof.

The precursor composition is impregnated into a supporting material. Suitable supporting materials are solid, particulate porous materials which are inert to the other components of the catalyst composition, and to the other active components of the reaction system. Such supporting materials include inorganic materials such as oxides of silicon and aluminum.

The supporting materials are used in the form of dry powders having an average particle size of about 10 to 250 microns, and preferably of about 50 to 150 microns. These materials are also porous and have a surface area of at least 3, and preferably of 50 or higher, square meters per gram. Catalyst activity or productivity is apparently also improved with particles having pore sizes of at least 80 Angstrom units and preferably of at least 100 Angstrom units.

The supporting material should be dry, that is, free of absorbed water. Drying of the supporting material is carried out by heating it at a temperature of 600°C or higher. Alternatively, in the case of silica supports, the supporting material dried at a temperature of at least 200°C may be treated with about 1 to 8 weight percent of one or more of the aluminum alkyl compounds described above. This modification of the support by the aluminum alkyl compounds provides the catalyst composition with increased activity and also improves polymer particle morphology of the resulting ethylene polymers.

Formation of Catalyst Precursor

The precursor composition is formed in a multi-step procedure, as indicated in the summary above. Initially, a solution of a first precursor composition is prepared by dissolving at least one transition metal compound and at least one magnesium compound in at least one electron donor compound at a temperature of about 20 °C up to the boiling point of the electron donor compound. Higher temperatures may be utilized by conducting the operation under pressure. The transition metal compound can be added to the electron donor compound before or after addition of the magnesium compound, or concurrent therewith. The dissolution of the transition metal and the magnesium compounds can be facilitated by stirring, and in some instances by refluxing these compounds in the electron donor compound.

Alter the transition metal and the magnesium compounds are dissolved, the solution may be passed through a suitable inert filter media to remove any insoluble materials which may be present in the magnesium or titanium compounds.

The first precursor composition may be isolated from the solution by crystallization or by precipitation with a $C_5$ to $C_8$ aliphatic or aromatic hydrocarbon such as hexane, isopentane or benzene, or by spray drying. Such isolation is not required, however. If isolated, the crystallized or precipitated first precursor composition will be in the form of fine particles having an average particle size of about 10 to 100 microns and a bulk density of about 18 to 33 pounds per cubic foot. (0.29 to 0.53 g/cc). This isolated first precursor composition may later be used in impregnation of the carrier material in either the first or subsequent impregnation steps.

In the preferred method of catalyst preparation, the first precursor composition is not isolated and the impregnation proceeds using the steps outlined below.

Impregnation of First Precursor in Support:

The first precursor composition is impregnated, in a weight ratio of about 0.1 to 1, and preferably about 0.2 to 0.75, parts of the first precursor composition into one part by weight of a porous carrier, hereinafter referred to as a supporting material, to afford a supported first precursor composition.

The impregnation of the supporting material with the first precursor composition is accomplished by slurring a selected amount of supporting material with an appropriate volume of a solution of first precursor composition at an appropriate concentration in electron donor compound, and allowing the precursor composition to impregnate it. The solvent electron donor is then removed by drying at temperatures in the range of 25-90°C. Partial vacuum may also be used to speed removal of the excess electron donor compound.

The volume of the solution of the first precursor composition is that which is sufficient to form a slurry with the selected amount of the supporting material. The concentrations of magnesium compound and transition metal compound in the electron donor solution of the first precursor composition are such that the solution is not saturated with respect to any constituent. Furthermore, these concentrations are sufficiently low that the solution remains unsaturated even when its volume is reduced to a volume equal to the pore volume of the selected amount of the supporting material. Thus, a dilute slurry will contain a lower concentration of the first precursor composition than a more concentrated slurry. Satisfaction of these criteria assures that crystallization of the first precursor composition occurs primarily within the pores of the supporting material.

The solution of first precursor material used in forming the slurry with the supporting material may be the solution in which the first precursor material was prepared, without isolation of the precursor, or it may be a solution prepared from the isolated first precursor material.

Sub-Pore Volume Impregnation

In the next step of the preparative process, a second solution, of at least one magnesium compound, at least one transition metal compound, or a mixture of such compounds, is prepared in at least one electron donor material in the manner described above, and an amount of the above-described supported first precursor composition is mixed with a volume of this second solution, the volume of the second solution used being less than or equal to the residual pore volume of the selected amount of the supported first precursor composition. The electron donor material, which may be the same as or different from the electron donor used in the first solution, is removed as described above, to yield catalyst precursor composition impregnated in the supporting material, in the form of a dry free-flowing material. If necessary or desired, these steps are repeated until the desired final precursor composition is achieved.

When thus made as disclosed above, the final catalyst precursor composition has the formula

$$Mg_mM(OR)_nX_p\{ED\}_q$$

wherein

M is a transition metal selected from the group of zirconium, titanium, vanadium and hafnium, and preferably Ti or V;

R is R' or COR' wherein R' is a $C_1$ to $C_{14}$ aliphatic hydrocarbon radical or a $C_6$ to $C_{14}$ aromatic hydrocarbon radical; preferably, R and R' are each methyl or phenyl;

X is Cl, Br, I, or a mixture thereof, and preferably Cl;

ED is the electron donor compound; and preferably a cyclic ether having 4 or 5 carbon atoms in the ring;

m is 0.5 to 56, preferably 2 to 10, most preferably 3 to 10;

n is 0, 1 or 2;

p is 4 to 116, preferably 6 to 30, and most preferably 9 to 24; and

q is 2 to 85, preferably 4 to 20, and most preferably 6 to 18.

In this final supported catalyst precursor the level of transition metal is generally 0.15 to 0.75, preferably 0.15 to 0.5, and most preferably 0.2 to 0.5 millimoles/gram, based on the total weight of the supporting material and the catalyst precursor therein. The level of $MgX_2$ contained in the precursor composition is preferably >0.8 millimoles/gram and most preferably >0.9 millimoles/gram of precursor composition including the supporting material.

Catalyst Preparation: Activation of Precursor Composition

The precursor composition is activated by treatment with sufficient activator compound to transform transition metal atoms in the precursor composition to an active state.

The activator compound has the structure $Al(R'')_cX'_dH_e$ wherein X' is Cl or OR''', preferably Cl; R'' and R''' are the same or different and are $C_1$ to $C_{14}$ saturated hydrocarbon radicals, preferably $C_1$ to $C_6$ saturated hydrocarbon radicals; d is 0 to 1.5, preferably 0 or 1; e is 1 or 0, preferably 0; and $c + d + e = 3$.

The activator compounds can be used individually or in combinations thereof, and include such materials as

$Al(CH_3)_3$, $Al(CH_3)_2Cl$, $Al(C_2H_5)_3$, $Al(C_2H_5)_2Cl$, $Al(i-C_4H_9)_3$, $Al_2(C_2H_5)_3Cl_3$, $Al(i-C_4H_9)_2H$, $Al(C_6H_{13})_3$, $Al(C_8H_{17})_3$, $Al(C_2H_5)_2H$ and $Al(C_2H_5)_2(OC_2H_5)$. Preferred activator compounds are $Al(C_2H_5)_3$, $Al(C_2H_5)_2Cl$, and $Al(C_6H_{13})_3$.

In the preferred catalyst activation procedure, the precursor composition is activated outside the polymerization reactor with enough activator compound to provide a partially activated precursor composition which has an activator compound/transition metal molar ratio of up to 10:1 and preferably of about 2:1 to 8:1. This partial activation reaction is preferably carried out in a hydrocarbon solvent slurry followed by drying of the resulting mixture, to remove the solvent, at temperatures between 20°C and 80°C, and preferably 50°C to 70°C. The resulting product is a free-flowing solid particulate material. As will be explained more fully below, complete activation occurs in the polymerization reactor. It has been found that addition of all of the activator compound outside of the polymerization reactor frequently results either in sticky catalyst due to liquid activator compound exceeding the pore volume of the precursor composition, or catalysts with reduced or extremely low productivity due to overreduction by the activator compound. It is therefore preferable to feed the catalyst as a dry powder and complete activation inside the reaction zone or use an alternative procedure described below.

In an alternative partial activation procedure, the precursor composition may be suspended in a slurry of an oil, such as a mineral oil or other high viscosity fluid which is inert to the catalyst and partial activation reagents, and the partial activation reagents may be added to this slurry. The slurry may then be used directly in the polymerization reaction by metering in suitable quantities of the partially activated precursor composition in a quantity to produce polymer at the desired rate. The additional activator compound may be added either to the precursor composition suspended in this fluid, or separately to the reactor. For reasons apparent to one skilled in the art, it is preferred to add the additional activator compound separately.

About 10 to 400, and preferably about 10 to 100, mols of the activator compound are used per mol of the transition metal compound in fully activating the catalyst precursor.

The Polymerization Reaction

The polymerization reaction is conducted by contacting ethylene or a mixture of ethylene and at least one comonomer which is an alpha olefin having 3-8 carbon atoms, a molecular weight control agent, typically hydrogen gas, and the additional activator compound, preferably in a gas phase process such as a fluid bed process, and substantially in the absence of catalyst poisons such as moisture, oxygen, carbon monoxide, carbon dioxide, and acetylene, with a catalytically effective amount of the partially activated and modified precursor composition, at a temperature and at a pressure sufficient to initiate the polymerization reaction. Polymerization procedures are known to those skilled in the art, so will not be discussed in detail here. See U.S. Patent 4,379,759 for a discussion of a fluidized bed polymerization process.

In the polymerization reactor, activation is completed with the additional activator compound which can be the same as that employed for partial activation of the precursor composition, or a different compound.

The additional activator compound and the partially activated precursor composition are preferably fed to the reactor through separate feed lines. The additional activator compound may be sprayed into the reactor in the form of a solution thereof in a hydrocarbon diluent such as propane, butane, isopentane, hexane, or mineral oil. Other liquid or gaseous feeds to the reactor may also be used to disperse the additional activator compound in the reactor. Materials such as ethylene, nitrogen and comonomer streams may be used. This solution usually contains about 2 to 30 weight percent of the activator compound. The additional activator compound may also be used in the absence of diluent solvent.

The additional activator compound is added to the reactor in such amounts as to provide, in the reactor, together with the amounts of activator compound and transition metal compound fed with the partially activated precursor composition, a total Al/M molar ratio of about 10 to 400 and preferably of about 10 to 100. The additional amounts of activator compound added to the reactor react with, and complete the activation of, the transition metal compound in the reactor.

In a typical continuous gas phase process such as the fluid bed process, discrete portions of the dry partially activated precursor composition are continuously fed to the reactor, with discrete or continuous feed of portions of additional activator compound needed to complete the activation of the partially activated precursor composition, during the continuing polymerization process in order to replace active catalyst sites that are expended during the course of the reaction and to replace catalyst which exits the reactor as product is periodically or continuously removed from the polymerization reactor. In the alternative method of catalyst feed to the reactor, either discrete or continuous portions of the catalyst as a slurry may be fed to the reactor, with discrete or continuous feed of additional activator compound.

Experimental

The following Examples are designed to illustrate the process of the present invention and are not intended as a limitation upon its scope.

Glossary

The properties of the polymers produced in the Examples were determined by the following test methods:

| | |
|---|---|
| Density (g/cc) | Measurement techniques are in accord with ASTM Method D1248. A plaque is made according to ASTM Method D1928, Procedure C. Resin density is measured in a density gradient column according to ASTM Method D1505. The result is reported in g/cc. |
| Melt Index (MI) | ASTM D-1238, Condition E, measured at 190°C and reported as grams per 10 minutes. |
| Flow Rate (HLMI) | ASTM D-1238, Condition F, measured at 10 times the weight used in the melt index test above. |
| Melt Flow Ratio (MFR) | is the ratio of Flow Rate to Melt Index. This correlates with the molecular weight distribution of the product polymer. Lower MFRs indicates narrower molecular weight distributions. |
| Productivity | A sample of the resin product is ashed, and the weight % of ash is determined; since the ash is essentially composed of the catalyst, the productivity is thus the pounds of polymer produced per pound of total catalyst consumed. The amounts of metals and halogens in the ash are determined by elemental analyses. |
| Bulk Density | The resin is poured into a 500 ml graduated cylinder, and weighed by difference. |
| Pore Volume | Measured by BET nitrogen absorption/desorption. |
| ppmv | parts per million by volume |
| Davison 955 | is silica having a peak in the desorption curve in pore diameter of 200-220Å and an average pore diameter of 180-200Å, with 40-45% of the pores having diameters >200Å, available from the Davison Chemical Div. of W.R. Grace & Co. |
| Davison 956 | is silica having a peak in the desorption curve in pore diameter of 280-300Å and an average pore diameter of 260-280Å, with ≈85% of the pores having diameters >200Å, available from the Davison Chemical Div. of W.R. Grace & Co. |
| TEAL | stands for Triethyl aluminum. |
| TOS | stands for TEAL on silica, the treated support. |
| DEAC | stands for diethyl aluminum chloride. |
| TnHAL | stands for tri-n-hexyl aluminum. |
| APS | stands for average particle size. |

General Procedure for Preparation of an Impregnated Precursor Composition:

Step A: Dehydration of Carrier Material:

The carrier material, Davison Grade 955 or 956 silica, is charged to a fluid bed dehydrator and heated under fluidization with air to 600°C. The fluidizing gas velocity is maintained between greater than 2 and less than 20 times the minimum fluidization velocity of the carrier material. A preferred gas velocity is approximately 10 times the minimum fluidization velocity. The material is held at the temperature of 600°C for a minimum of 4 hours, cooled under nitrogen and then discharged from the dehydrator for use in the next step. All subsequent steps are carried out under an inert gas (nitrogen) blanket.

Step B: Aluminum Alkyl Treatment of the Support:

The supporting material is placed in a mix vessel equipped with a helical ribbon agitator designed for good solids mixing. Approximately 750-1000 grams of the support material is charged to the mix vessel for every 3 liters of isopentane charged to the mix vessel, sufficient to produce a slurry of the support in isopentane. Sufficient triethyl aluminum is then added to achieve a 5.8 wt% loading of triethyl aluminum based on the amount of support material added to the mix vessel. The methyl aluminum is used as a 10 wt% solution in isopentane or a 20 wt% solution in hexane. Neat TEAL may also be used. The solvent is evaporated off at near atmospheric pressure. The jacket temperature is set at approximately 70°C and the material is stripped of solvent while stirring until a dry free flowing powder is produced. The material is removed and stored under dry nitrogen for further use.

Step C: Preparation of First Precursor Composition Solution:

Tetrahydrofuran which has been dried with molecular sieves to less than 50 ppm by volume moisture and has been deoxygenated by bubbling nitrogen through the liquid is charged to the mix vessel described above. Sufficient tetrahydrofuran, $MgCl_2$ and $TiCl_3$ are charged to the reactor to produce the solution. The mixture is heated to about 60-65°C while stirring. After 4 hours, the mixture is passed through a $10\mu m$ filter to remove undissolved materials (typically <1.0% of charged $MgCl_2$) and stored under dry nitrogen for use in the next step. The composition of the solution based on mass balance is given in the Table below.

Step D: Preparation of Impregnated First Precursor Composition:

Carrier material produced in Step B is added to the mix vessel previously described. The solution prepared in Step C and additional small quantities of tetrahydrofuran (used to flush lines) are charged to the mix vessel. The slurry is agitated for approximately 30 minutes to disperse all components adequately. Drying is then begun with a jacket temperature of 60-80°C. After approximately 4-6 hours, the pressure in the vessel is reduced slowly to about 1 pound per square inch absolute (psia). Drying is continued until the temperature difference between the material temperature in the vessel and the jacket temperature approaches a steady state. Typically, the temperature difference between the vessel jacket and internal material temperature will change less than 2 C° per 1/2 hour. The material is then cooled to less than 45°C and used in the next step. The analyses of the materials are given in the tables below.

Step E: Preparation of Sub Pore Volume Impregnated Precursor Composition:

Solution Preparation:

A solution of magnesium chloride and/or titanium chloride in tetrahydrofuran is prepared in a manner as described in Step C except that different amounts of both the titanium chloride and magnesium chloride component may be used. The analysis of the solution based on mass balance is given in the table below.

Impregnation with Sub-Pore Volume quantities:

A desired amount of the precursor composition prepared in Step D is charged to the mix vessel described previously. A quantity of the solution prepared above is charged to the mix vessel. The quantity is such that the residual pore volume of the precursor composition is not exceeded. The residual pore volume of the precursor composition is calculated assuming that the density of the solid precursor composition impregnated in the pores of the support is 2.0 cc/gram. The mass of precursor contained within the pores of the support is calculated from the analysis of the first precursor composition. The pore volume of the support is given in the table below. The contents are agitated during the addition. The solution is added over a period of approximately 15-30 minutes. Following this, the vessel contents are agitated for another 3-6 hours, followed by drying as described in step D above. The final analysis of the material is given in the table below. The material is a dry free flowing solid with essentially no chips or agglomerates. Recovery vs theoretical yield is high.

Step F: Preparation of Partially Activated Catalyst:

The precursor composition prepared above is contacted in the mix vessel with the partial activation agents as follows: approximately 0.5 kilograms of precursor composition are charged to the mix vessel for each 3 liters of isopentane. While stirring, diethyl aluminum chloride is charged at a defined molar ratio to the tetrahydrofuran contained in the precursor composition. After a 30 minute mix period, Tri-n-hexyl aluminum is charged at a defined molar ratio to the tetrahydrofuran contained. After a brief period of mixing, the solvent is stripped off as described in Step B above. The dry free flowing partially activated catalyst is then used in polymerization. Molar ratios of partial activation agents used are given in Table 1 below.

Preparation of Exemplary Catalysts

As shown in Table 1 below, several exemplary catalysts were made, in accordance with the above general preparative procedure.. The first involved only a single impregnation of the supporting material with first precursor composition solution containing both magnesium and titanium compounds. The second was similar to the first, but in this case, the initially formed supported precursor was further treated with additional magnesium in a second impregnation. The third was similar to the second, but employed a different supporting material. The fourth was similar to the second, but was treated with both additional magnesium and additional titanium in the second and a third impregnation of both magnesium and titanium was also conducted. Amounts of reagents and details of the preparations are given in Table 1 below.

## Table 1
## Catalyst Preparation Examples

| Catalyst Example # | 1 (Standard) | 2 | 3 | 4 |
|---|---|---|---|---|
| Support Material (Davison silica) | # 956 | # 956 | # 955 | # 956 |
| Support Pore Volume (cc/gram) | 1.6 | 1.6 | 1.55 | 1.6 |
| **Impregnation** | | | | |
| TOS Charge 1st Impregnation (kg) | 456.4 | 456.4 | 454 | 458 |
| THF charge to 1st solution( Kg) | 1909 | 1909 | 1900 | 2180 |
| Mg Conc. in 1st Impregnation (mmol/g) | 0.238 | 0.238 | 0.236 | 0.156 |
| Ti Conc. in 1st Impregnation (mmol/g) | 0.076 | 0.076 | 0.076 | 0.0294 |
| Mg/Ti ratio (1st Impregnation) | 3.13 | 3.13 | 3.11 | 5.31 |
| THF Concentration, 1st Precursor | 14.7 | 14.7 | nd | nd |
| Mixing Temperature, 1st Impregnation | 60° C | 60° C | 60° C | 60° C |
| Mixing Time, 1st Impregnation | 0.5 hr | 0.5 hr | 0.5 h r | 3 hr |
| Initial Drying Temp., 1st Impregnation. | 60° C | 60° C | 60° C | 60° C |
| Drying Time, 1st Impregnation | 1 hr, 12 psia<br>4 hr, 7 psia<br>4 hr, 5 psia<br>8 hr, ≈1 psia | 1 hr, 12 psia<br>4 hr, 7 psia<br>4 hr, 5 psia<br>8 hr, ≈1 psia | 4 hr, 12 psia<br>4 hr, 7 psia<br>4 hr, 5 psia<br>8 hr, ≈1 psia | 4 hr, 12 psia<br>2 hr,10 psia<br>6.5 hr, 7 psia<br>8 hr, ≈1 psia |
| Final Drying Temperature, 1st Impreg. | 80° C | 80° C | 80° C | 80° C |
| Mg Conc. in 2nd Impregnation (mmol/g) | na | 0.54 | 0.52 | 0.446 |
| Ti Conc. in 2nd Impregnation (mmol/g) | na | 0 | 0 | 0.084 |
| Mg/Ti ratio (2nd Impregnation) | 3.11 | 5.22 | 4.36 | 5.31 |
| Mixing Temperature, 2nd Impregnation | na | 60° C | 60° C | 60° C |
| Mixing Time, 2nd Impregnation | na | 6 hrs | 6 hrs | 3 hrs |
| Drying Time, 2nd Impregnation | | 1 hr, 10 psia<br>4 hr,7 psia<br>6 hr, ≈1 psia | 1 hr, 10 psia<br>4 hr, 7 psia<br>6 ,hr, ≈1 psia | 1 hr, 10 psia<br>4 hr, 7 psia<br>6hr, ≈1 psia |
| Final Drying Temperature, 2nd Impreg. | na | 80° C | 80° C | 80° C |

## Table 1 (cont.)
## Catalyst Preparation Examples

| Catalyst Example # | 1 (Standard) | 2 | 3 | 4 |
|---|---|---|---|---|
| Mg Conc. in 3rd Impregnation (mmol/g) | na | | | 0.446 |
| Ti Conc. in 3rd Impregnation (mmol/g) | na | | | 0.084 |
| Mg/Ti Ratio (3rd Impregnation) | na | | | 5.31 |
| Mixing Temperature, 3rd Impregnation | na | | | 60° C |
| Mixing Time, 3rd Impregnation | na | | | 3 hrs |
| Drying Time, 3rd Impregnation | | | | 1 hr, 10 psia / 4 hr, 7 psia / 6 hr, ≈1 psia |
| Final Drying Temperature, 3rd Impregnation | na | | | 80° C |
| Mg Concentration, Final Precursor (wt%) | 1.91 | 2.87 | 2.46 | 3.14 |
| Ti Concentration, Final Precursor (wt%) | 1.21 | 1.08 | 1.11 | 1.05 |
| THF Concentration, Final Precursor (wt%) | 14.7 | 17.32 | 16.32 | 19.36 |
| Final Yield vs Theoretical % | >95 | >95 | >95 | >95 |
| **Catalyst Pre-Activation** | | | | |
| DEAC/THF Mole Ratio | 0.52 | 0.52 | 0.5 | 0.5 |
| TnHAL/THF Mole Ratio | 0.15 | 0.15 | 0.2 | 0.2 |
| Catalyst Drying Temperature | 65°C | 65°C | 65°C | 65°C |
| Drying Time | ≈4-6 hours | ≈4-6 hours | ≈4-6 hours | ≈4-6 hours |

Note that the Mg/Ti ratio in Example 1 (Standard) is lower than that of the exemplary catalysts.

<u>Comparative Example 1</u>

The steps of the general preparative procedure given above were followed, except that Step E (second impregnation) was omitted. Details of the preparation and precursor analyses are presented in Table 2 below.

Comparative Example 2

The steps of the general preparative procedure given above were followed in the same manner as for comparative example 1. In addition, an amount of diethyl aluminum chloride was added to the tetrahydrofuran solution of magnesium chloride and titanium chloride to attempt to increase the solubility of the magnesium compound.

Table 2

| Comparative Examples | | |
|---|---|---|
| **CATALYST Preparation Examples** | | |
| Catalyst Example # | Comp. Ex. 1 | Comp. Ex. 2 |
| Support Material (Davison silica) | #955 | #955 |
| Support Pore Volume (cc/g) | 1.55 | 1.55 |
| **Impregnation** | | |
| TOS Charge, 1st Impregnation (kg) | 45.9 | 22.7 |
| THF charge to 1st solution (kg) | 275 | 227 |
| Mg Conc. in 1st Impregnation (mmol/g) | 0.145 | 0.2112 |
| Ti Conc. in 1st Impregnation (mmol/g) | 0.031 | 0.0392 |
| Mg/Ti Ratio, 1st Impregnation | 4.68 | 5.39 |
| THF Concentration, 1st Precursor | 19.50% | 25.4 |
| Mixing Temperature, 1st Impregnation | 65 | 65 |
| Mixing Time, 1st Impregnation | 30 min. | 30 min. |
| Initial Drying Temp., 1st Impregnation | 65 | 65 |
| Drying Time, 1st Impregnation | 10 hrs at < 1psia | 10 hrs at < 1psia |
| DEAC Addition | none | yes |
| DEAC/Mg Mole Ratio | | 0.7 |
| DEAC Solution: 10 wt% in isopentane | | |
| Final Drying Temperature, 1st Impregnation | 65 | 65 |
| Precursor Characterization | 3 inch skin on walls of mix vessel | many chips, poor flow properties |
| Final Drying Temperature, 2nd Impregnation | | |
| Mg Concentration, Final Precursor | nd | 2.626 |
| Ti Concentration, Final Precursor | nd | 1.06 |
| THF Concentration, Final Precursor | 19.5 | 25.4 |
| Yield % vs Theoretical | <80% | <80 |

Drying the products of comparative examples 1 and 2 resulted in formation of precursor compositions with large amounts of agglomerates and chips. These materials flowed poorly and discharged poorly from the reaction vessel. Analyses given in Table 2 show that the chips were largely composed of $MgCl_2$. Precursor yield was less than 80%, compared to greater than 95% for examples 1 to 4. These precursors were unsuitable for use in polymerization reactions due to poor feed characteristics.

Polymerization Procedure:

Polymerization was carried out in a fluidized bed reactor as described in US patents 4,302,565; 4,302,566; and 4,303,771. Dry catalyst was fed to the bed. Cocatalyst solution was fed to the reactor through introduction into the recycle line below the gas distribution plate. Gas compositions were analyzed using a gas chromatograph and additional monomer, comonomer and hydrogen molecular weight control agent were added as needed to maintain the compositions as specified. Additional catalyst is added to maintain polymerization rates as product and catalyst contained therein are periodically withdrawn from the fluid bed to maintain a constant fluidized bed level. Polymerization data is given in Table 3

Table 3

| Polymerization Data | | | | |
|---|---|---|---|---|
| RUN NO. | PP # 1 | PP # 2 | Plant # 1 | Plant # 2 |
| Catalyst Example # | 1 (Standard) | 2 | 3 | 4 |
| **REACTION CONDITIONS** | | | | |
| Temp. (°C) | 88 | 88 | 88 | 88 |
| Pressure(psia) | 315 | 315 | 315 | 315 |
| C2 Part. Pressure (psia) | 111 | 107 | 106 | 100 |
| H2/C2 Molar Ratio | 0.13 | 0.12 | 0.115 | 0.119 |
| C6/C2 Molar Ratio | 0.12 | 0.099 | 0.123 | 0.12 |
| Cocatalyst(in isopentane solvent) | 5% TEAL | 5% TEAL | 11% TEAL | 11% TEAL |
| TEAL (ppm in bed) | 442 | 389 | 350 | 275 |
| Cocat. Feed Rate (cc/hr) | 290 | 250 | | |
| Production Rate (lb/hr) | 47 | 46 | 49500 | 46500 |
| Residence Time (hr) | 2.13 | 2.17 | 2.22 | 2.37 |
| **RESIN PROPERTIES** | | | | |
| Melt Index (dg/min I2) | 0.9 | 0.86 | 1.05 | 1.06 |
| Flow Index (dg/min I21) | 28.4 | 24.1 | | |
| Density (g/cm3) | 0.917 | 0.918 | 0.9186 | 0.919 |
| MFR | 31.5 | 28.4 | 28 to 30 | 28 to 30 |
| Ash (wt%) | 0.045 | 0.043 | 0.035 | 0.03 |
| Residual Ti (ppm) | 4.3 | 3.2 | 1.7 | 1.75 |
| Al (ppm)(calculated) | 108 | 95 | 82 | 65 |
| Al/Ti (Molar) | 45 | 53 | 84 | 66 |
| Bulk Density (lb/ft$^3$) | 21.4 | 21.6 | 22.2 | 22 |
| APS, inches | 0.028 | 0.031 | 0.035 | 0.036 |

It is apparent from these examples that the catalyst of the invention yields higher productivity (on both a Ti basis and a catalyst mass basis) than catalyst prepared by the usual single impregnation, and produces polymer with no degradation of resin bulk density or particle size. Polymer particle size increases due to the increased catalyst productivity demonstrated by the exemplary catalysts (i.e. each catalyst particle produces essentially one polymer particle). In addition, other polymer properties appear to be unchanged.

**Claims**

1.  A catalyst composition comprising a supported precursor composition having the formula

$$Mg_m M(OR)_n X_p \{ED\}_q$$

wherein:

M is a transition metal selected from the group consisting of vanadium, titanium, zirconium and hafnium;

R is R' or COR' wherein R' is a $C_1$ to $C_{14}$ aliphatic hydrocarbon radical or a $C_6$ to $C_{14}$ aromatic hydrocarbon radical;

X is Cl, Br, I, or a mixture thereof;

ED is an electron donor compound which is a liquid organic compound in which said precursor composition is soluble and which is selected from the group consisting of alkyl esters of aliphatic and aromatic carboxylic acids, aliphatic ethers, cyclic ethers, and aliphatic ketones;

m is 0.5 to 56;

n is 0, 1 or 2;

p is 4 to 116; and

q is 2 to 85;

said precursor composition having been formed by means of the following steps i) through v):

(i) forming a slurry of a porous supporting material, and a solution of at least one magnesium compound and at least one transition metal compound in an electron donor compound;

said magnesium compound having the formula $MgX_2$ wherein X is as defined above;

said transition metal compound having the formula $M(OR)_aX_b$ wherein M, R, and X are as defined above; a is 0, 1 or 2; b is 1 to 4 inclusive; and a + b = 3 or 4 ; and

the total weight of the solutes in the solution which forms the slurry of step (i) being such that said weight of solutes dissolves in a volume of the electron donor material equal to the pore volume of the supporting material employed in said slurry;

(ii) removing solvent electron donor compound from the slurry of step (i) to recover said magnesium and transition metal compounds and associated electron donor compound in conjunction with said supporting material;

(iii) adding to the product of step (ii) a solution of electron donor compound containing at least one material selected from the group consisting of magnesium compounds and transition metal compounds as defined in step (i), the volume of this added solution being less than the pore volume of the material being treated;

(iv) removing solvent electron donor compound from the product of step (iii) to recover said magnesium and transition metal compounds and associated electron donor compound in conjunction with supporting material; and

(v) repeating steps (iii) and (iv) if necessary until catalyst precursor of the desired composition is obtained, whereby the formed precursor composition is substantially contained within the pores of said supporting material and insufficient precursor composition remains on the surface to allow agglomerates formation;

the total amounts of said magnesium and transition metal compounds employed being such that the values of m, n, p and q are satisfied in the final catalyst precursor; and

said precursor having been partially activated by treating it in a hydrocarbon slurry with >0 to 10 mols of activator compound per mol of transition metal in said precursor composition;

said activator compound having the formula

$$Al(R'')_cX'_dH_e$$

wherein

X' is Cl or OR''';

R'' and R''' are the same or different; and are $C_1$ to $C_{14}$ hydrocarbon radicals;

d is 0 to 1.5;

e is 1 or 0; and

c + d + e = 3 .

2. The catalyst composition of claim 1 wherein in said catalyst precursor, the ratio of Mg to M is 2-10 and the level of $MgX_2$ contained in the precursor composition is >0.8 millimoles/gram of precursor composition including the supporting material.

3. The catalyst composition of claim 1 wherein in said catalyst precursor, the ratio of Mg to M is 3-10 and the level of $MgX_2$ contained in the precursor composition is >0.9 millimoles/gram of precursor composition including the supporting material.

4. A process for preparing a catalyst composition, comprising the following steps:

(A) forming on a supporting material a catalyst precursor composition having the formula

$$Mg_mM(OR)_nX_p\{ED\}_q$$

wherein:

M is a transition metal selected from the group consisting of vanadium, titanium, zirconium and hafnium;
R is R' or COR' wherein R' is a $C_1$ to $C_{14}$ aliphatic hydrocarbon radical or a $C_6$ to $C_{14}$ aromatic hydrocarbon radical;
X is Cl, Br, I, or a mixture thereof;
ED is an electron donor compound which is a liquid organic compound in which said precursor composition is soluble and which is selected from the group consisting of alkyl esters of aliphatic and aromatic carboxylic acids, aliphatic ethers, cyclic ethers, and aliphatic ketones;
m is 0.5 to 56;
n is 0, 1 or 2;
p is 4 to 116; and
q is 2 to 85;

by means of the following steps i) through v):

(i) forming a slurry of a porous supporting material, and a solution of at least one magnesium compound and at least one transition metal compound in an electron donor compound;
said magnesium compound having the formula $MgX_2$ wherein X is as defined above;
said transition metal compound having the formula $M(OR)_aX_b$ wherein M, R, and X are as defined above; a is 0, 1 or 2; b is 1 to 4 inclusive; and $a + b = 3$ or 4 ; and
the total weight of the solutes in the solution which forms the slurry of step (i) being such that said weight of solutes dissolves in a volume of the electron donor material equal to the pore volume of the supporting material employed in said slurry;
(ii) removing solvent electron donor compound from the slurry of step (i) to recover said magnesium and transition metal compounds and associated electron donor compound in conjunction with said supporting material;
(iii) adding to the product of step (ii) a solution of electron donor compound containing at least one material selected from the group consisting of magnesium compounds and transition metal compounds as defined in step (i), the volume of this added solution being less than the pore volume of the material being treated;
(iv) removing solvent electron donor compound from the product of step (iii) to recover said magnesium and transition metal compounds and associated electron donor compound in conjunction with supporting material; and
(v) repeating steps (iii) and (iv) if necessary until catalyst precursor of the desired composition is obtained whereby the formed precursor composition is substantially contained within the pores of said supporting material and insufficient precursor composition remains on the surface to allow agglomerates formation;
the total amounts of said magnesium and transition metal compounds employed being such that the values of m, n, p and q are satisfied in the final catalyst precursor; and

(B) partially activating the catalyst precursor composition by treating it in a hydrocarbon slurry with >0 to 10 mols of activator compound per mol of transition metal in said precursor composition;
said activator compound having the formula

$$Al(R'')_cX'_dH_e$$

wherein

X' is Cl or OR''';
R'' and R''' are the same or different; and are $C_1$ to $C_{14}$ hydrocarbon radicals;
d is 0 to 1.5;
e is 1 or 0; and
$c + d + e = 3$ .

**5.** The process of claim 4 wherein in said catalyst precursor, the ratio of Mg to M is 2-10 and the level of $MgX_2$ contained in the precursor composition is >0.8 millimoles/gram of precursor composition including the supporting material.

**6.** The process of claim 4 wherein in said catalyst precursor, the ratio of Mg to M is 3-10 and the level of $MgX_2$ contained in the precursor composition is >0.9 millimoles/gram of precursor composition including the supporting material.

**7.** A process for producing polyethylene homopolymers and copolymers, comprising the following steps:

(A) forming a reaction mixture comprising:

i) ethylene, or a mixture of ethylene and at least one comonomer which is an alpha olefin having 3-8 carbon atoms;
ii) optionally, a molecular weight control agent;
iii) an activator compound; and
iv) a catalyst composition of claim 1; and

(B) effecting polymerization of said ethylene or said mixture of ethylene and comonomer in the presence of said catalyst composition.

**8.** The process of claim 7 wherein in the precursor to said catalyst composition, the ratio of Mg to M is 2-10 and the level of $MgX_2$ contained in the precursor composition is >0.8 millimoles/gram of precursor composition including the supporting material.

**9.** The process of claim 7 wherein in the precursor to said catalyst composition, the ratio of Mg to M is 3-10 and the level of $MgX_2$ contained in the precursor composition is >0.9 millimoles/gram of precursor composition including the supporting material.

**10.** The process of claim 7 wherein the polymerization is conducted in the gas phase.

Impregnate porous supporting material
with a first solution, of Mg compound
and transition metal compound in an
oxygen-containing electron donor

Remove excess electron donor

Impregnate treated porous supporting material
with sub-pore volume of a second solution,
of Mg compound and/or transition metal
compound

Remove excess electron donor

Repeat last two steps as required

# FIG. 1

## EUROPEAN SEARCH REPORT

European Patent Office

Application Number

EP 95 11 7325

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 043 220 (UNION CARBIDE) | 1,7 | C08F10/00 |
| A | * page 7, line 13 - page 15, line 27 * | 4 | C08F4/654 |
|  | * page 32 - page 33; examples 1A-1B * |  |  |
|  | * page 36, line 13; table I * |  |  |
|  | * page 35, line 37; examples 1-6 * |  |  |
|  | --- |  |  |
| A | EP-A-0 446 989 (MONTEDIPE) | 1 |  |
|  | * examples 4,6 * |  |  |
|  | * claim 1 * |  |  |
|  | ----- |  |  |

TECHNICAL FIELDS
SEARCHED      (Int.Cl.6)

C08F

The present search report has been drawn up for all claims

| Place of search | Date of completion of the search | Examiner |
|---|---|---|
| THE HAGUE | 12 April 1996 | Fischer, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)